Europäisches Patentamt

European Patent Office

Office européen des brevets

(11) Publication number: **0 507 808 B1**

# EUROPEAN PATENT SPECIFICATION

(45) Date of publication of patent specification: **08.03.95**  (51) Int. Cl.⁶: $F03B\ 11/00$, $G01D\ 18/00$

(21) Application number: **91901407.6**

(22) Date of filing: **28.12.90**

(86) International application number:
**PCT/GB90/02036**

(87) International publication number:
**WO 91/10065 (11.07.91 91/15)**

The file contains technical information submitted
after the application was filed and not included in
this specification

(54) **CALIBRATION OF PUMP EFFICIENCY METERS.**

(30) Priority: **28.12.89 GB 8929281**

(43) Date of publication of application:
**14.10.92 Bulletin  92/42**

(45) Publication of the grant of the patent:
**08.03.95 Bulletin  95/10**

(84) Designated Contracting States:
**AT BE CH DE DK ES FR GB GR IT LI LU NL SE**

(56) References cited:
**EP-A- 0 159 152**

**British Standard Specification No. BS5316 :
Part 3 : 1988, ISO 5198 : 1987, pages 44 and
67**

(73) Proprietor: **ADVANCED ENERGY MONITORING
SYSTEMS LIMITED
The Energy Center,
Finnimore Industrial Estate
Ottery-St-Mary,
Devon EX11 1NR (GB)**

(72) Inventor: **YATES, Maurice, Alan
Wychbury Sandgate Lane
Wiggaton
Ottery-St-Mary
Devon EX11 1PX (GB)**

(74) Representative: **Brown, Michael Stanley et al
Alpha and Omega
Chine Croft
East Hill
Ottery St. Mary
Devon EX11 1PJ (GB)**

EP 0 507 808 B1

## Description

EP-A-0159152 describes a technique for monitoring and protecting hydraulic machines in order to gauge imminent failure of the pump so that the pump can be removed from service for routine maintenance before incurring lengthy and expensive repairs associated with catastrophic failure. The technique monitors pump efficiency using as its basis Poirsons equation which is over 70 years old. Indeed, it is now common place to measure efficiency of a pump per se using this equation which is reproduced below:-

$$\text{Efficiency} \quad = \quad \frac{1}{a + Cp.dT/g.dH}$$

where a is the isothermal factor of the fluid, Cp is the specific heat of the fluid, dT is the temperature rise across the pump, dH is the temperature differential across the pump and g is the acceleration due to gravity.

It can therefore be seen that the efficiency of a hydraulic pump, such as that used in the water or oil industry, can be measured by using equipment to find the differential temperature and pressure across the pump in use and inserting the relevant values into the equation above. Indeed, the applicant manufactures and markets a thermodynamic efficiency meter wherein temperature and head probes are inserted either side of a pump to be assessed and the meter evaluates and produces values of efficiency.

However, although every effort is made to ensure that the efficiency values are accurate, one of the problems with such a meter is that the degree of uncertainty in the efficiency value can not be measured and furthermore the uncertainty may vary according to the head of pressure that the pump is using.

It is an object of the present invention to provide a method for assessing the uncertainty in such an efficiency measurement.

According to one aspect of the present invention there is provided a method of determining the uncertainty in measured efficiency values for a pump as measured by a meter, the method comprising:-

providing means to change the rate of flow of a flowing fluid, wherein said means can be regarded as having a substantially zero efficiency state;

monitoring the pressure and temperature differential across said means, said meter producing therefrom a measured value of actual efficiency; and

determining an uncertainty value for the measured value of actual efficiency on the basis of a theoretical efficiency substantially equal to 1/2a, where a is the isothermal factor of the fluid.

By employing the method of the invention, a simple and convenient test can be produced for evaluating the accuracy of a meter which is employed to monitor the efficiency of a pump. It will be apparent that the method can be employed on site or by taking the meter to a test location.

Preferably, the method includes the step of providing the means to change the rate of flow of a flowing fluid as a throttling valve. This serves as a simple and convenient way of changing the rate of flow of a fluid flowing in a pipe between two chambers say. Moreover, the determination of theoretical efficiency can be automatically performed so that a quick and easy determination of the uncertainty in measured values is given. This allows the meter to be easily and quickly calibrated.

According to another aspect of the present invention there is provided apparatus for testing pump efficiency meters, the apparatus comprising means for connecting and changing the rate of flow of a fluid flowing between a source and an outlet, wherein said means can be regarded as having a substantially zero efficiency state; and locations at the source and outlet for receiving temperature and pressure sensors; wherein, in use, a meter to be tested is connected to said sensors to determine actual efficiency values and an uncertainty value for the determined value of actual efficiency is evaluated on the basis of a theoretical efficiency substantially equal to 1/2a, where a is the isothermal factor of the fluid.

Thus, apparatus is provided in which the sensors from a meter under test can be connected so that the meter determines efficiency values of the flowing fluid whilst the theoretical value of efficiency is calculated according to the formula 1/2a. This is a very simple and convenient way of testing the accuracy of the meter under test and by using the apparatus over a range of heads for the flowing fluid, the meter can be calibrated. It will be apparent that the test can be performed at the location of the meter or the meter can be removed to another location for testing.

Conveniently, the two said locations comprise respective chambers connected respectively to a source of fluid of known head and to a fluid outlet. The apparatus preferably includes control means connected to the meter under test and connected to receive data concerning the fluid head and fluid temperature and calculating automatically theoretical values of efficiency against monitored values of head for the flowing fluid. Preferably, means are provided for altering the head of the fluid source. A throttle valve in a pipe is preferred to connect together the two chambers.

An example of the present invention will now be described with reference to the accompanying drawings, in which:

Figure 1 illustrates an apparatus using the method embodying the present invention,

Figure 2 illustrates the uncertainty in the efficiency value measured by the meter against head.

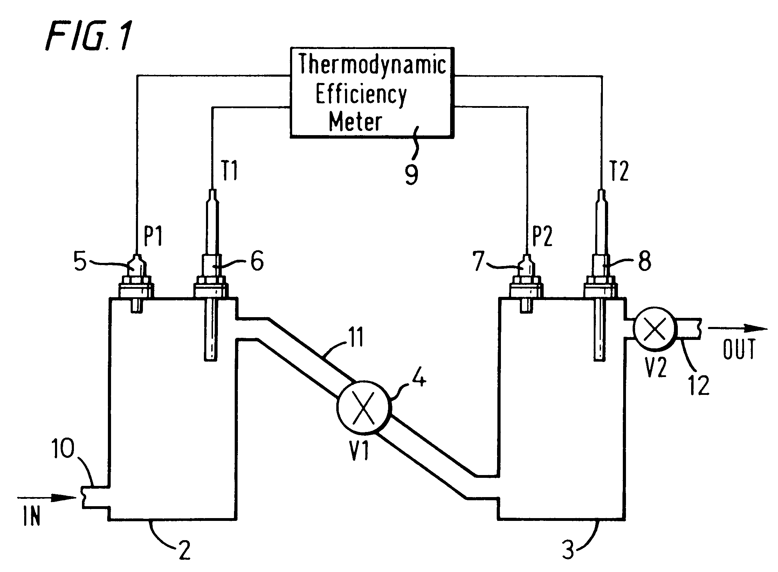

Referring to figure 1, a test rig for checking the uncertainty of a pump efficiency meter is mounted within a thermally insulated environment 1 so that the rig functions substantially at a constant temperature. The rig includes an fluid inlet chamber 2 and a fluid outlet chamber 3 connected by a pipe 11 incorporating a throttle valve 4. The chamber 2 includes locations for receiving the input pressure transducer 5 and input temperature transducer 6 of the meter to be tested and the chamber 3 includes locations for receiving the output pressure transducer 7 and output temperature transducer 8 of the meter. The input and output transducers are connected in known manner to the control unit 9 of a known pump efficiency meter which is to be tested.

Fluid of known temperature and head flows into the chamber 2 via an inlet 10, through the pipe 11 and valve 4 into the chamber 3 and out therefrom via an outlet 12. A typical value is 1 litre per sec and a head up to 100 metres. Whilst the fluid is flowing, the actual efficiency value is measured by the meter using the thermodynamic principle. The uncertainty in the actual efficiency value is determined as follows.

The efficiency of a turbine can be regarded as

$$a - \frac{dT.Cp}{g.dH}$$

The valve 4 acting as a throttling calorimeter may be regarded as a turbine having zero efficiency, i.e. no work output. Consequently, in a zero efficiency state

$$a - \frac{dT.Cp}{g.dH} = 0$$

therefore

$$dT = \frac{a.g.dH}{Cp} \qquad \ldots\ldots\ldots 1)$$

If a thermodynamic efficiency meter operating in the pumping mode is connected across the valve 4 as above, then the meter will determine pump efficiency Ep according to the equation

$$\text{Pump efficiency} = \frac{1}{a + Cp.dT/g.dH} \qquad \ldots\ldots\ldots 2)$$

Inserting equation 1) above into equation 2) will give the theoretical efficiency ETH

$$ETH = 1/2a$$

Thus, the uncertainty of the measured pump efficiency as a percentage is

$$\underline{Ep - ETH} = \underline{Ep - 1/2a} \cdot 100$$
$$ETH \qquad\qquad 1/2a$$

Therefore,

uncertainty $= 100 \cdot (2a.Ep-1) \qquad 3)$

Alternatively,, the equations can be viewed as follows:-

$$\underline{ETH - Ep} = 1 - \underline{Ep} = 100 \ (1-2a.Ep)$$
$$\hat{E}TH \qquad\qquad ETH$$

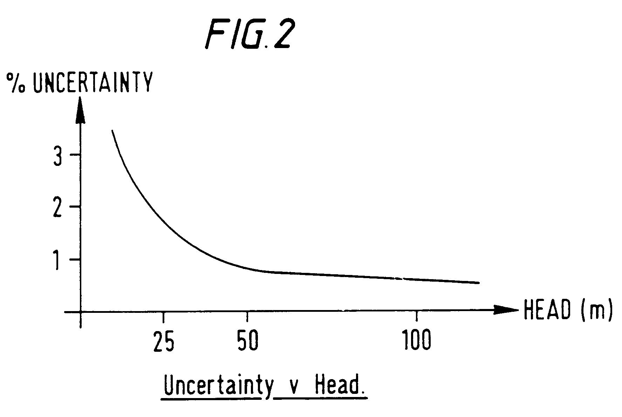

As an example, if in a test on water at 10 degrees Centigrade where a has a value of 0.9779, the actual efficiency value Ep is measured to be 0.5, then the uncertainty calculated from equation 3) is 2.21%. Figure 2 illustrates a plot of the percentage uncertainty against head of a known pump efficiency meter for water.

It can therefore be seen that the method and apparatus of the present invention gives a very simple and easy way of testing the uncertainty of a thermodynamic efficiency meter which can allow the meter to be calibrated to give accurate values.

**Claims**

1. A method for determining the uncertainty in measured efficiency values of a pump as measured by a meter (9), the method comprising:-

   providing means (4) to change the rate of flow of a flowing fluid, wherein said means (4) can he regarded as having a substantially zero efficiency state;

   monitoring the pressure and temperature differential across said means (4), said meter (9) producing therefrom a measured value of actual efficiency; and

   determining an uncertainty value for the measured value of actual efficiency on the basis of a theoretical efficiency substantially equal to 1/2a, where a is the isothermal factor of the fluid.

2. A method as claimed in Claim 1, characterised in that the means to change the rate of flow of a flowing fluid is a throttle valve (4).

3. Apparatus for testing pump efficiency meters (9), the apparatus comprising means (4) for connecting and changing the rate of flow of a fluid flowing between a source (2) and an outlet (3), wherein said means (4) can be regarded as having a substantially zero efficiency state; and locations at the source (2) and outlet (3) for receiving temperature and pressure sensors (6,8 and 5,7); wherein, in use, a meter (9) to be tested is connected to said sensors (5,6,7 and 8) to determine actual efficiency values and an uncertainty value for the determined value of actual efficiency is evaluated on the basis of a theoretical efficiency substantially equal to 1/2a, where a is the isothermal factor of the fluid.

4. Apparatus as claimed in Claim 3, characterised in that the two said locations comprise respective chambers (2 and 3) connected respectively to a source (10) of fluid of known head and to a fluid outlet (12).

5. Apparatus as claimed in Claim 3 or 4, characterised in that it includes control means connected to the meter (9) under test and connected to receive data concerning the fluid head and fluid temperature and calculating automatically theoretical values of efficiency against monitored values of head for the flowing fluid.

6. Apparatus as claimed in Claim 5, characterised in that it further includes means for altering the head of the fluid source.

EP 0 507 808 B1

7. Apparatus as claimed in any one of Claims 3 to 6, characterised in that it is provided with a thermally insulated environment.

**Patentansprüche**

1. Verfahren zur Bestimmung der Unsicherheit bei den von einem Meßgerät gemessenen Wirkungsgradwerten einer Pumpe, das sich wie folgt zusammensetzt:
Bereitstellung von Mitteln (4) zur Änderung der Durchflußgeschwindigkeit einer fließenden Flüssigkeit, wobei von den genannten Mitteln (4) angenommen werden kann, daß sie sich im wesentlichen in dem Zustand eines Null-Wirkungsgrades befinden;
Überwachung des Druck- und Temperaturdifferentials in den genannten Mitteln (4), mit Hilfe dessen das Meßgerät (9) einen Meßwert für den tatsächlichen Wirkungsgrad bestimmt;
Bestimmung eines Unsicherheitswertes für den Meßwert des tatsächlichen Wirkungsgrads aufgrund eines theoretischen Wirkungsgrads, der sich im wesentlichen auf 1/2a beläuft, wobei es sich bei a um den isothermischen Faktor einer Flüssigkeit handelt.

2. Verfahren nach Anspruch 1,
dadurch gekennzeichnet,
daß die Mittel zur Änderung der Durchflußgeschwindigkeit einer fließenden Flüssigkeit von einem Drosselventil gebildet werden.

3. Vorrichtung zur Prüfung des Pumpenwirkungsgradmeßgeräts (9), wobei die Vorrichtung Mittel (4) zu Verbindungszwecken und zur Änderung der Durchflußgeschwindigkeit einer zwischen einer Quelle (2) und einem Abfluß (3) fließenden Flüssigkeit aufweist, wobei von den Mitteln (4) angenommen werden kann, daß sie sich im wesentlichen in dem Zustand eines Nullwirkungsgrades befinden, sowie Örtlichkeiten an der Quelle (2) und dem Abfluß (3) zur Aufnahme von Temperatur- und Druckfühlern (6, 8 und 5, 7), wobei im Gebrauch ein zu prüfendes Meßgerät (9) mit den Fühlern (5, 6, 7 und 8) verbunden ist zur Bestimmung der tatsächlichen Wirkungsgradwerte, und ein Unsicherheitswert für den bestimmten Wert des tatsächlichen Wirkungsgrads wird aufgrund eines theortischen Wirkungsgrads bewertet, der sich im wesentlichen auf 1/2a beläuft, wobei a der isothermische Faktor der Flüssigkeit ist.

4. Vorrichtung nach Anspruch 3,
dadurch gekennzeichnet,
daß die Örtlichkeiten entsprechende Kammern (2 und 3) aufweisen, die jeweils mit der Quelle (10) einer Flüssigkeit bekannter Druckhöhe und mit einem Flüssigkeitsabfluß (12) verbunden sind.

5. Vorrichtung nach Anspruch 3 oder 4,
dadurch gekennzeichnet,
daß sie Steuermittel aufweist, die mit dem zu prüfenden Meßgerät (9) verbunden sind und weiterhin so verbunden sind, daß sie Daten über Flüssigkeitsdruckhöhe und Flüssigkeitstemperatur aufnehmen und automatisch theoretische Wirkungsgradwerte berechnen können im Vergleich zu überwachten Druckwerten für die fließende Flüssigkeit.

6. Vorrichtung nach Anspruch 5,
dadurch gekennzeichnet,
daß sie weiterhin Mittel zur Änderung der Druckhöhe der Flüssigkeitquelle aufweist.

7. Vorrichtung nach einem der Ansprüche 3 bis 6,
dadurch gekennzeichnet,
daß sie mit einer Umgebung mit Wärmeisolierung versehen ist.

**Revendications**

1. Une méthode pour déterminer l'incertitude en valeurs mesurées d'efficacité d'une pompe telles que mesurées par un compteur (9), la méthode comprenant:-
la provision des moyens (4) pour changer le débit d'un fluide circulant, dans lequel les moyens cités (4) peuvent être regardés comme ayant un état d'efficacité en grande partie à zéro;

5

le contrôle de la différentielle en pression et en température en travers des moyens cités (4), le compteur cité (9) produisant de là une valeur mesurée d'efficacité réelle; et

la détermination d'une valeur d'incertitude pour la valeur mesurée d'efficacité réelle par suite d'une efficacité théorique en grande partie égale à $\frac{1}{2}$ a, où "a" fait le facteur isotherme du fluide.

2. Une méthode selon la revendication 1, caracterisée en ce que les moyens pour changer le débit d'un fluide circulant comportent un papillon des gaz (4).

3. De l'appareil pour mettre à l'essai des compteurs de l'efficacité d'une pompe (9), l'appareil comportant les moyens (4) pour relier et changer le débit d'un fluide qui circule entre une entrée (2) et une sortie (3), où les moyens cités (4) peuvent être regardés comme ayant un état d'efficacité en grande partie à zéro; et des emplacements à l'entrée (2) et à la sortie (3) pour recevoir des détecteurs de température et de pression (6,8 et 5,7); où un compteur (9) en usage qui va être soumis à des essais est relié aux détecteurs cités (5, 6, 7, et 8) pour déterminer les valeurs d'efficacité réelles et une valeur d'incertitude pour la valeur déterminée d'efficacité réelle s'évalue par suite d'une efficacité théorique en grande partie égale a $\frac{1}{2}$ a, où "a" fait le facteur isotherme du fluide.

4. De l'appareil selon la revendication 3, caractérisé en ce que les deux emplacements cités comportent des chambres respectives (2 et 3) reliées chacune à une entrée (10) de fluide d'une pression connue et à une sortie (12) de fluide.

5. De l'appareil selon la revendication 3 ou 4, caractérisé en ce qu'il comprend un moyen de contrôle relié au compteur (9) soumis à des essais et relié pour recevoir des données en ce qui concerne la pression du fluide et la température du fluide et qui calcule automatiquement des valeurs d'efficacité théoriques contre des valeurs controlées de la pression du débit du fluide.

6. De l'appareil selon la revendication 5, caracterisé en ce qu'il inclue en outre les moyens de modifier la pression de l'entrée du fluide.

7. De l'appareil selon chacune des revendications 3 jusqu'à 6, caracterisé en ce qu'il soit muni d'un environnement isolé thermiquement.

FIG.1

Thermodynamic Efficiency Meter

OUT

IN

## FIG.2

% UNCERTAINTY

HEAD (m)

Uncertainty v Head.